# EUROPÄISCHE PATENTSCHRIFT

(11) **EP 3 070 761 B1**
(45) Veröffentlichungstag und Bekanntmachung des Hinweises auf die Patenterteilung: **14.03.2018**
(21) Anmeldenummer: 15159371.2
(22) Anmeldetag: 17.03.2015
(51) Int. Cl.: H01M 2/10, H01M 2/14, H01M 2/18, H01M 10/04, H01M 10/0525

(54) **Batterievorrichtung**
BATTERY DEVICE
DISPOSITIF DE BATTERIE

(43) Veröffentlichungstag der Anmeldung: 21.09.2016
(73) Patentinhaber: Samsung SDI Co., Ltd., Yongin-si, Gyeonggi-do (KR)
(72) Erfinder: Golubkov, Andrej, 8010 Graz (AT)
(74) Vertreter: Gulde & Partner

(56) Entgegenhaltungen:
- WO-A1-2014/103007
- JP-A- 2012 084 297
- JP-A- 2014 010 983
- US-A1- 2010 143 785

## Beschreibung

### Gebiet der Erfindung

Die vorliegende Erfindung betrifft eine Batterievorrichtung umfassend mehrere prismatische Batteriezellen.

### Stand der Technik

Batterievorrichtungen die mehrere prismatische Batteriezellen umfassen sind hinlänglich bekannt und bilden insbesondere Hochvoltbatterien die beispielsweise als Antriebsbatterien in Kraftfahrzeugen eingesetzt werden.

Durch chemische Alterungsprozesse entstehen in Batteriezellen wie insbesondere Lithium-Ionen Zellen Gase, die bei gasdicht geschlossenen Batteriezellen zu einem erhöhten Gasdruck in der Zelle führen. Die Gehäuse der Batteriezellen können zwar fest ausgebildet sein, wie etwa bei sogenannten Metal-Can Zellen, sie sind aber nicht vollkommen starr, so dass zu einer Ausbuchtung der Zellgehäuse in mittigen Zonen der Batteriezellen kommt. Diese langsame Geometrieveränderung macht die mechanische Anbindung von Batteriezellen in einer Batterievorrichtung schwierig.

Dem Druckaufbau kann beispielsweise durch massive Endplatten auf beiden Seiten eines Zellstapels entgegengewirkt werden. Die Kraft mit der die Batteriezellen gegeneinander vorgespannt werden kann dabei etwa 10 kN erreichen. Gleichzeitig muss eine gegenseitige galvanische Isolierung der Zellgehäuse gewahrt bleiben. Auch die Zerlegung einer solchen unter hohem Druck stehenden Batterievorrichtung beispielsweise im Zuge eines Recycling kann problematisch sein.

Alternativ können die Batteriezellen in einem solchen Abstand zueinander verbaut werden, dass genug Raum für eine Ausdehnung der Zellen bleibt. Hier ist jedoch der erhöhte Platzbedarf nachteilig und die mechanische Anbindung der Zellen schwierig.

Beispielsweise aus der WO 2011/051386 ist es bekannt, elastische Schichten zwischen Batteriezellen zu verwenden, die die geometrischen Änderungen der Batteriezellen zum Teil aufnehmen können.

Trennwände zwischen Batteriezellen sind beispielsweise auch aus der US 2012/0177952 A1 bekannt.

Die JP 2014-010983 A beschreibt eine Batterievorrichtung mit mehreren durch Zwischenwände getrennten Zellen, wobei die Zwischenwände in einer mittigen Zone Ausbuchtungen aufweisen.

Aus der EP 2940755 A1 ist eine Batterievorrichtung mit mehreren prismatischen, durch Zwischenwände voneinander getrennten Batteriezellen bekannt. Die Zwischenwände weisen Kontaktpunkte auf, welche bei der Montage zu Einbuchtungen führen.

### Zusammenfassung der Erfindung

Es ist eine Aufgabe der Erfindung, eine Batterievorrichtung anzugeben, die geringen Bauraum aufweist und mechanisch stabil ist.

Die Lösung der Aufgabe erfolgt durch eine Batterievorrichtung, umfassend mehrere prismatische Batteriezellen und mindestens eine Zwischenwand die zwischen zwei der prismatischen Batteriezellen angeordnet ist, so dass jeweils eine Seitenfläche jeder der zwei prismatischen Zellen jeweils einem Kontaktbereich einer Seitenfläche der Zwischenwand benachbart ist, wobei die Zwischenwand in einer mittigen Zone beider Kontaktbereiche eine Einbuchtung gegenüber den Randzonen des selben Kontaktbereichs der Zwischenwand aufweist und die Einbuchtung sich über die gesamten Flächen beider Kontaktbereiche, also über beide Seitenflächen der Zwischenwand soweit sie den Batteriezellen benachbart sind, erstreckt und die Zwischenwand (2) zumindest einseitig in der Mitte dünner ausgeführt ist als an den Rändern.

Der Kontaktbereich ist also jener Bereich der an jeder Seite der Zwischenwand zum Kontakt mit einer Batteriezelle vorgesehen ist.

Der Kontaktbereich ist also jeweils jene Fläche einer Seitenfläche der Zwischenwand, die einer Seitenfläche einer Batteriezelle gegenüberliegend benachbart angeordnet ist. Die Zwischenwand kann größer ausgebildet sein als die Seitenfläche einer Batteriezelle, so dass der Kontaktbereich kleiner als die Seitenfläche der Zwischenwand ist. Die Zwischenwand kann auch gleich groß oder kleiner als die Seitenfläche der Batteriezelle ausgebildet sein, so dass der Kontaktbereich durch die gesamte Seitenfläche der Zwischenwand gebildet wird.

"Mittige Zone" meint jeweils einen Abschnitt der Seitenfläche der in der Nähe des Mittelpunktes des Kontaktbereiches ausgebildet ist. Bevorzugt ist der Mittelpunkt des Kontaktbereiches, also der Mittelpunkt der Seitenflächen der anliegenden Batteriezellen, auch der Mittelpunkt der mittigen Zone, also der Mittelpunkt der Einbuchtung bzw. des konkaven Bereiches.

Eine Einbuchtung der Zwischenwand bedeutet dabei, dass die Zwischenwand in diesem Bereich, also in der Mitte des Kontaktbereichs, zumindest einseitig dünner ausgeführt ist, als an den Rändern des Kontaktbereichs. Die Einbuchtung muss erfindungsgemäß zumindest so groß sein, dass zumindest ein relevanter Teil einer Ausbuchtung einer Batteriezelle darin aufgenommen werden kann. Die Einbuchtung kann daher beispielsweise nicht durch ein Befestigungsloch oder durch eine nicht glatte Oberfläche gegeben sein.
Die Einbuchtung kann kontinuierlich oder auch stufenweise größer werden und somit die Zwischenwand kontinuierlich oder stufenweise zur Mitte hin dünner werden. Bevorzugt ist die Einbuchtung konkav ausgebildet.
Erfindungsgemäß ist eine mittige Einbuchtung der Zwischenwand bereits im Vorhinein, also nach der Herstellung und schon vor dem Betrieb der Batterievorrichtung ausgebildet. Diese Einbuchtung kann spätere Ausbuchtungen der Zellgehäuse aufnehmen, so dass die Einbuchtung im Laufe des Betriebs durch die Batteriezellen bzw. deren Zellgehäuse gefüllt wird, vor dem Betrieb der Batterievorrichtung aber leer ist, also bevorzugt mit Luft oder einem anderen Gas gefüllt ist.
Zu Beginn des Lebenszyklus der Batterievorrichtung, bei nicht gealterten Zellen, wird somit die Kraft von Zelle zu Zelle hauptsächlich über die äußeren Randbereiche der Zwischenstücke bzw. deren Kontaktbereiche übertragen, so dass bereits ein stabiler Zellstapel gebildet wird. Am Ende des Lebenszyklus, bei gealterten Zellen, kommt es zu einer Kraftübertragung von Zelle zu Zelle über die gesamten Kontaktbereiche der Zwischenwände.
Gemäß der Erfindung weist die Zwischenwand in einer mittigen Zone beider Kontaktbereiche, also an beiden Seitenflächen, jeweils eine Einbuchtung gegenüber den Randzonen des jeweiligen Kontaktbereichs der Zwischenwand auf. Die Zwischenwand ist vorzugsweise beidseitig in der Mitte dünner ausgeführt als an den Rändern.
Bevorzugt ist zumindest ein Kontaktbereich, bevorzugt beide Kontaktbereiche, konkav geformt.
Es erstreckt sich die Einbuchtung bzw. konkave Ausformung über den gesamten Kontaktbereich, erfindungsgemäß über die gesamten Flächen beider Kontaktbereiche, also über beide Seitenflächen der Zwischenwand soweit sie den Batteriezellen benachbart sind.
Die Batteriezellen sind bevorzugt Metal-Can Zellen, weisen also ein festes metallisches Gehäuse auf.
Die Batteriezellen sind bevorzugt Lithium-Ionen Zellen.
Die Zwischenwand ist vorzugsweise galvanisch isolierend ausgeführt.
Die Zwischenwand kann elastisch ausgeführt sein um zusätzlich zur geometrischen Ausformung auch durch ihre Elastizität Ausbuchtungen der Batteriezellen aufnehmen zu können. Die Zwischenwand kann aber auch fest, also nicht elastisch ausgebildet sein.
Bevorzugt sind die Batteriezellen in der Batterievorrichtung zwischen zwei Endplatten angeordnet und, vorzugsweise mittels der Endplatten und Spannbändern oder Spannfedern zwischen den Endplatten, gegeneinander vorgespannt.

### Kurzbeschreibung der Zeichnungen

Die Erfindung wird im Folgenden beispielhaft unter Bezugnahme auf die Zeichnungen beschrieben.
- Fig. 1: ist eine dreidimensionale schematische Darstellung einer nicht gealterten Batteriezelle (links) und einer gealterten Batteriezelle (rechts).
- Fig. 2: ist eine dreidimensionale schematische Darstellung einer Zwischenwand einer erfindungsgemäßen Batterievorrichtung.
- Fig. 3: ist eine dreidimensionale schematische Darstellung einer erfindungsgemäßen Batterievorrichtung.

### Detaillierte Beschreibung der Erfindung

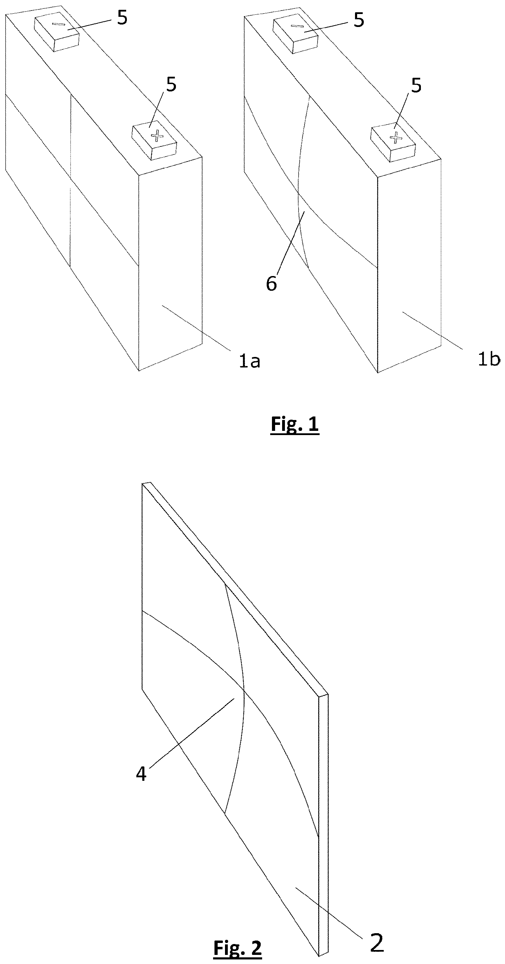

In Fig. 1 ist links eine prismatische Batteriezelle 1a in ihrem Zellengehäuse mit Zellpolen 5 dargestellt, wie sie nach der Herstellung aussieht, also in einem Zustand, in dem sich das Gehäuse der Batteriezelle 1a noch nicht durch längeren Betrieb der Batteriezelle verformt hat. In der Darstellung rechts in Fig. 1 ist als Batteriezelle 1b schematisch die selbe Batteriezelle der Fig. 1 links, also Batteriezelle 1a dargestellt, jedoch nach einem längeren Betrieb der Batteriezelle 1a, 1b, also eine gealterte Batteriezelle 1a, 1b. Das im Betrieb der Batteriezelle 1a, 1b erzeugte Gas und der daraus resultierende Druck auf das Zellengehäuse der Metal-Can Zelle haben zur Ausbuchtung 6 um die Mitte der Seitenfläche der Batteriezelle 1b geführt. Auch die nicht sichtbare rückwärtige Seitenfläche der Batteriezelle 1b weist eine entsprechende Ausbuchtung 6 auf.

Fig. 2 ist eine dreidimensionale schematische Darstellung einer Zwischenwand 2 einer erfindungsgemäßen Batterievorrichtung. Die Zwischenwand 2 dient zur Anordnung zwischen zwei prismatischen Batteriezellen 1a, 1b, wie in Fig. 1 dargestellt. Die Zwischenwand 2 weist in einer mittigen Zone der Seitenfläche - falls die Zwischenwand größer als eine Seitenfläche der Batteriezelle wäre in einer mittigen Zone eines Kontaktbereiches der Seitenfläche, in dem die Zwischenwand der Batteriezelle benachbart wäre, eine Einbuchtung 4 auf, die im Vergleich zu den Randzonen der selben Seitenwand bzw. des selben Kontaktbereichs der Seitenwand der Zwischenwand 2 eingebuchtet ist.

Die Einbuchtung 4 liegt somit im mit Batteriezellen 1a, 1b zu einer Batterievorrichtung verbauten Zustand jeweils einer Ausbuchtung 6 einer Batteriezelle 1a, 1b benachbart gegenüber, so dass eine Ausbuchtung 6 jeweils mehr oder weniger gut in einer Einbuchtung 4 aufgenommen werden kann.

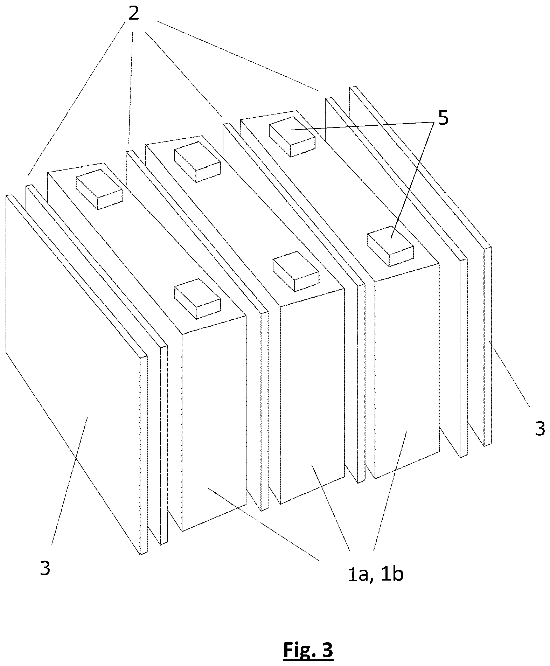

Fig. 3 ist eine Darstellung einer erfindungsgemäßen Batterievorrichtung. Mehrere Batteriezellen 1a, 1b sind in einem Stapel mit jeweils dazwischenliegenden Zwischenwänden 2 angeordnet, so dass jeweils eine Seitenfläche von zwei prismatischen Zellen 1a, 1b jeweils einer Seitenfläche - oder einem Kontaktbereich einer Seitenfläche- einer Zwischenwand 2 benachbart ist. An den beiden Enden des Zellstapels sind jeweils nicht eingebuchtete Endplatten 3 angeordnet, die -nicht dargestellt- gegeneinander gespannt sind um den Zellstapel zusammen zu halten. Die Kraft wird dabei von Zelle zu Zelle bei nicht gealterten Zellen hauptsächlich über die Außenränder der Zwischenwände 2 weitergegeben, bei gealterten Zellen zunehmend über die gesamten Flächen der Zwischenwände 2.

Eingebuchtete Zwischenwände 2 können auch zwischen den äußersten Batteriezellen 1a, 1b und den Endplatten 3 vorgesehen sein.

### Bezugszeichenliste

- 1a, 1b: Batteriezelle
- 2: Zwischenwand
- 3: Endplatte
- 4: Einbuchtung
- 5: Zellpol
- 6: Ausbuchtung

## Patentansprüche

1. Batterievorrichtung, umfassend mehrere prismatische Batteriezellen (1a, 1b) und mindestens eine Zwischenwand (2) die zwischen zwei der prismatischen Batteriezellen (1a, 1b) angeordnet ist, so dass eine Seitenfläche jeder der zwei prismatischen Zellen (1a, 1b) jeweils einem Kontaktbereich einer Seitenfläche der Zwischenwand (2) benachbart ist,
wobei die Zwischenwand (2) in einer mittigen Zone beider Kontaktbereiche eine Einbuchtung (4) gegenüber den Randzonen des selben Kontaktbereichs der Zwischenwand (2) aufweist und
sich die Einbuchtung (4) über die gesamten Flächen beider Kontaktbereiche, also über beide Seitenflächen der Zwischenwand (2) soweit sie den Batteriezellen (1a, 1b) benachbart sind, erstreckt und die Zwischenwand (2) zumindest einseitig in der Mitte dünner ausgeführt ist als an den Rändern.

2. Batterievorrichtung nach Anspruch 1,
**dadurch gekennzeichnet, dass** die Zwischenwand (2) beidseitig in der Mitte dünner ausgeführt ist als an den Rändern.

3. Batterievorrichtung nach Anspruch 1,
**dadurch gekennzeichnet, dass** zumindest ein Kontaktbereich, bevorzugt beide Kontaktbereiche, konkav geformt sind.

4. Batterievorrichtung nach zumindest einem der vorhergehenden Ansprüche,
**dadurch gekennzeichnet, dass** die Batteriezellen (1a, 1b) Metal-Can Zellen sind.

5. Batterievorrichtung nach zumindest einem der vorhergehenden Ansprüche,
**dadurch gekennzeichnet, dass** die Batteriezellen (1a, 1b) Lithium-Ionen Zellen sind.

6. Batterievorrichtung nach zumindest einem der vorhergehenden Ansprüche,
**dadurch gekennzeichnet, dass** die Zwischenwand (2) galvanisch isolierend ausgeführt ist.

7. Batterievorrichtung nach zumindest einem der vorhergehenden Ansprüche,
**dadurch gekennzeichnet, dass** die Zwischenwand (2) elastisch ausgeführt ist.

8. Batterievorrichtung nach zumindest einem der vorhergehenden Ansprüche,
**dadurch gekennzeichnet, dass** die Batteriezellen (1a, 1b) zwischen zwei Endplatten (3) angeordnet und gegeneinander vorgespannt sind.

## Claims

1. Battery device, comprising a plurality of prismatic battery cells (la, 1b) and at least one intermediate wall (2) which is arranged between two of the prismatic battery cells (la, 1b) such that a side face of each of the two prismatic cells (1a, 1b) is in each case adjacent to a contact region of a side face of the intermediate wall (2), wherein the intermediate wall (2) has in a central zone of the two contact regions an indentation (4) with respect to the edge zones of the same contact region of the intermediate wall (2), and the indentation (4) extends over the entire surface areas of the two contact regions, that is to say over both side faces of the intermediate wall (2) to the extent that these are adjacent to the battery cells (la, 1b), and the intermediate wall (2) at least on one side is thinner in the middle than at the edges.

2. Battery device according to claim 1, **characterized in that** the intermediate wall (2) on both sides is thinner in the middle than at the edges.

3. Battery device according to claim 1, **characterized in that** at least one contact region, preferably both contact regions, are concave.

4. Battery device according to at least one of the preceding claims, **characterized in that** the battery cells (la, 1b) are metal can cells.

5. Battery device according to at least one of the preceding claims, **characterized in that** the battery cells (la, 1b) are lithium ion cells.

6. Battery device according to at least one of the preceding claims, **characterized in that** the intermediate wall (2) is designed to provide galvanic isolation.

7. Battery device according to at least one of the preceding claims, **characterized in that** the intermediate wall (2) is designed to be elastic.

8. Battery device according to at least one of the preceding claims, **characterized in that** the battery cells (1a, 1b) are arranged between two end plates (3) and are biased against each other.

## Revendications

1. Dispositif de batterie, comprenant plusieurs cellules de batterie (la, 1b) prismatiques et au moins une paroi intermédiaire (2) qui est agencée entre deux des cellules de batterie (la, 1b) prismatiques, de sorte qu'une surface latérale de chacune des deux cellules de batterie (la, 1b) prismatiques soit respectivement avoisinée par une région de contact d'une surface latérale de la paroi intermédiaire (2),
dans lequel la paroi intermédiaire (2) présente dans une zone centrale des deux régions de contact une échancrure (4) par rapport aux zones de bord de la même région de contact de la paroi intermédiaire (2) et
l'échancrure (4) s'étend sur l'ensemble de la surface des deux régions de contact, donc sur les deux surfaces latérales de la paroi intermédiaire (2) dans la mesure où elles sont avoisinées par les cellules de batterie (la, 1b), et la paroi intermédiaire (2) est réalisée, au moins d'un côté dans le centre, plus mince que sur les bords.

2. Dispositif de batterie selon la revendication 1,
**caractérisé en ce que** la paroi intermédiaire (2) est réalisée, des deux côtés dans le centre, plus mince que sur les bords.

3. Dispositif de batterie selon la revendication 1,
**caractérisé en ce qu'**au moins une région de contact, de préférence les deux régions de contact, sont de forme concave.

4. Dispositif de batterie selon l'une quelconque des revendications précédentes,
**caractérisé en ce que** les cellules de batterie (la, 1b) sont des cellules Metal-Can.

5. Dispositif de batterie selon l'une quelconque des revendications précédentes,
**caractérisé en ce que** les cellules de batterie (la, 1b) sont des cellules lithium-ion.

6. Dispositif de batterie selon l'une quelconque des revendications précédentes,
**caractérisé en ce que** la paroi intermédiaire (2) est réalisée par galvanisation de manière à être isolante.

7. Dispositif de batterie selon l'une quelconque des revendications précédentes,
**caractérisé en ce que** la paroi intermédiaire (2) est réalisée de manière à être élastique.

8. Dispositif de batterie selon l'une quelconque des revendications précédentes,
**caractérisé en ce que** les cellules de batterie (la, 1b) sont agencées entre deux plaques d'extrémité (3) et précontraintes l'une contre l'autre.
